# EUROPEAN PATENT SPECIFICATION

(11) **EP 4 579 842 B1**
(45) Date of publication and mention of the grant of the patent: **02.12.2026**
(21) Application number: 24209883.8
(22) Date of filing: 30.10.2024
(51) Int. Cl.: H01M 10/0525, H01M 50/406, H01M 50/417, H01M 50/449, H01M 50/457, H01M 50/491

(54) **ENERGY- STORAGE DEVICE, METHOD FOR MANUFACTURING THE SAME, AND ELECTRICITY-CONSUMPTION APPARATUS**
ENERGIESPEICHERVORRICHTUNG, VERFAHREN ZUR HERSTELLUNG DAVON UND ELEKTRIZITÄTSVERBRAUCHSVORRICHTUNG
DISPOSITIF DE STOCKAGE D'ÉNERGIE, SON PROCÉDÉ DE FABRICATION, ET APPAREIL DE CONSOMMATION D'ÉLECTRICITÉ

(30) Priority: 28.12.2023 CN 202311839859
(43) Date of publication of application: 02.07.2025
(73) Proprietor: Hithium Tech HK Limited, Hong Kong (HK)
(72) Inventor: ZHANG, Caomeng, Xiamen, Fujian 361100 (CN); XIAO, Wenwu, Xiamen, Fujian 361100 (CN); ZHANG, Jun, Xiamen, Fujian 361100 (CN); QIU, Bin, Xiamen, Fujian 361100 (CN)
(74) Representative: Santarelli

(56) References cited:
- CN-B- 102 931 371
- US-A1- 2014 374 937

## Description

### TECHNICAL FIELD

The application relates to the field of energy storage devices, and in particular, to an energy storage device, a method for manufacturing the same, and an electricity-consumption apparatus.

### BACKGROUND

After long-term operation of energy storage devices, a phenomenon of ion transport obstruction will occur at the upper part of a cell in the energy storage device. This leads to an increasing difference in ion transport speed between upper and lower parts of the cell, resulting in inconsistent overall kinetics of the cell, which, after long-term operation, affects the electrical performance of the energy storage device.

US 2014/0374937 A1 relates to a method of making a thin polymeric separator having an open porous structure and including forming a polymer-containing film having a non-uniform thickness across its width, producing a uniform distribution of pore sites throughout the polymer-containing film, reforming the polymer-containing film to a uniform thickness thereby introducing the open porous structure with variable porosity into the film, and obtaining the thin polymeric separator from the film in a shape complementary to the shapes of a positive electrode and a negative electrode such that, when the separator is placed between and in facial contact with the positive electrode and the negative electrode in an electrochemical cell and filled with an electrolyte solution, the porous structure includes pores that are sized and can be arranged in the cell to permit higher ionic current flow through the separator at locations removed from the electrical contacts on the electrodes so as to more uniformly distribute ionic current flow through the separator over the whole facial area of the separator.

CN 102 931 371 B relates to a method for preparing a battery separator and including: mixing molten polyolefin resin, molten pore-forming agent, and an additive, extruding the mixture, and casting the same into a thick sheet by pressing through a gap between a cooling roll and an adjustable roll; subjecting the thick sheet sequentially to longitudinal stretching and a first transverse stretching, and performing extraction to obtain an intermediate separator; and subjecting the intermediate separator to a second transverse stretching to obtain the battery separator.

### SUMMARY

The invention is set out in the appended set of claims.

### BRIEF DESCRIPTION OF THE DRAWINGS

To describe technical solutions in embodiments of the disclosure more clearly, the following introduces the accompanying drawings required for describing the embodiments of the disclosure.
FIG. 1 is a process flow chart of a method for manufacturing a separator according to an embodiment of the disclosure.
FIG. 2 is a schematic structural diagram of a separator according to an embodiment of the disclosure.
FIG. 3 is a process flow chart of a method for manufacturing a separator according to an embodiment of the disclosure.
FIG. 4 is a schematic structural diagram of an extruder according to an embodiment of the disclosure.
FIG. 5 is a process flow chart of a method for manufacturing a separator according to an embodiment of the disclosure.
FIG. 6 is a schematic structural diagram of a separator according to an embodiment of the disclosure.
FIG. 7 is a process flow chart of a method for manufacturing a separator according to an embodiment of the disclosure.
FIG. 8 is a schematic structural diagram of a separator according to an embodiment of the disclosure.
FIG. 9 is a schematic structural diagram of a separator according to an embodiment of the disclosure.
FIG. 10 is a schematic structural diagram of a separator according to an embodiment of the disclosure.
FIG. 11 is a schematic structural diagram of an energy storage device according to an embodiment of the disclosure.

Reference numerals are described as follows: separator - 1, first portion - 11, second portion - 12, third portion - 13, first transition portion - 141, second transition portion - 142, third transition portion - 143, extruder - 2, first extrusion port - 21, second extrusion port - 22, third extrusion port - 23, energy storage device - 3, tab - 31.

### DETAILED DESCRIPTION

The below description are preferred embodiments of the disclosure, and it is noted that various improvements and modifications can be made without departing from the principle of the disclosure to those of ordinary skill in the art, and the improvement and the modification are also considered as the protection scope of the disclosure.

In the description of the disclosure, it may be understood that the weight of the relevant components mentioned in the embodiments of the disclosure may not only refer to the specific content of each component, but may also represent the proportional relationship between the weights of the components. Therefore, as long as the components are scaled up or down according to the proportions described in the embodiments of the disclosure, they fall within the scope of the disclosure. Specifically, the weight described in the embodiments of the disclosure may be in units of µg, mg, g, kg, or other mass units well known in the chemical field.

Moreover, unless the context explicitly states otherwise, the singular forms of words may be understood to include the plural forms. The terms "include" or "have" are intended to indicate the presence of features, numbers, steps, operations, elements, parts, or combinations thereof, but are not intended to exclude the presence or possible addition of one or more other features, numbers, steps, operations, elements, parts, or combinations thereof.

The energy storage device includes an electrolyte, a positive electrode, a negative electrode, and a separator. A cell may be formed by winding layers of separators and electrodes. For example, a positive electrode, a separator, a negative electrode, and a separator may be sequentially stacked and wound to form the cell. The separator serves to separate the positive and negative electrodes, preventing short circuits caused by contact between the positive and negative electrodes inside a battery, while also facilitating ion transport. In the energy storage device, the separator is required to have low resistance, high conductivity, and high ion permeability. A porosity of the separator is directly related to an internal resistance of the energy storage device. The smaller the porosity, the higher the internal resistance, making it impossible for the energy storage device to achieve high-current discharge.

Through research, the researchers have found that in practical applications of energy storage devices, especially for high-capacity batteries, such as prismatic or cylindrical batteries, a phenomenon of ion transport obstruction will occur at the upper part of the cell after long-term operation. On the one hand, due to the combined effects of electrolyte consumption and gravity, the electrolyte consumption varies at different positions within the cell, leading to insufficient electrolyte at the upper part of the cell. On the other hand, when the energy storage device undergoes charging and discharging reactions, a region close to a tab experiences higher temperatures and faster charge and discharge reactions, resulting in accelerated electrolyte consumption and a greater likelihood of forming dry regions on the electrode. The presence of dry regions on the electrode will lead to a reduction in the effective active material of the positive and negative electrodes that can participate in the charge-discharge reactions, a reduction in the ion transport pathway between the positive and negative electrodes, and an increase in internal resistance, thereby affecting the cycle performance of the energy storage device. Therefore, it is necessary to timely replenish electrolyte to re-wet the dry regions on the electrodes at the upper parts of the positive and negative electrodes where dry regions are likely to form.

The dry region refers to a specific region on the electrode of an energy storage device where the electrolyte has either evaporated, dried out, or failed to properly penetrate, leading to insufficient wetting. In this region, the electrolyte is either absent or inadequately distributed, resulting in poor coverage or saturation of the electrode material. This can limit the electrochemical reactions that rely on the presence of the electrolyte, potentially reducing the efficiency and performance of the energy storage device.

Generally, after long-term operation, the upper part of the cell close to the tab experiences ion transport obstruction due to reduced electrolyte levels and the formation of dry regions on the electrodes. In contrast, a lower part of the cell has sufficient electrolyte and no dry regions are present on the electrodes, allowing for faster ion transport. This will result in inconsistent overall kinetics of the cell, affecting the electrical performance of the cell after long-term operation.

It may be noted that when the electrolyte is sufficient, the ion transport level is primarily determined by the kinetics of the positive and negative electrodes. The issue of inconsistent ion transport between the upper and lower parts of the cell only arises when the electrolyte has been significantly consumed, i.e., when the electrolyte is insufficient.

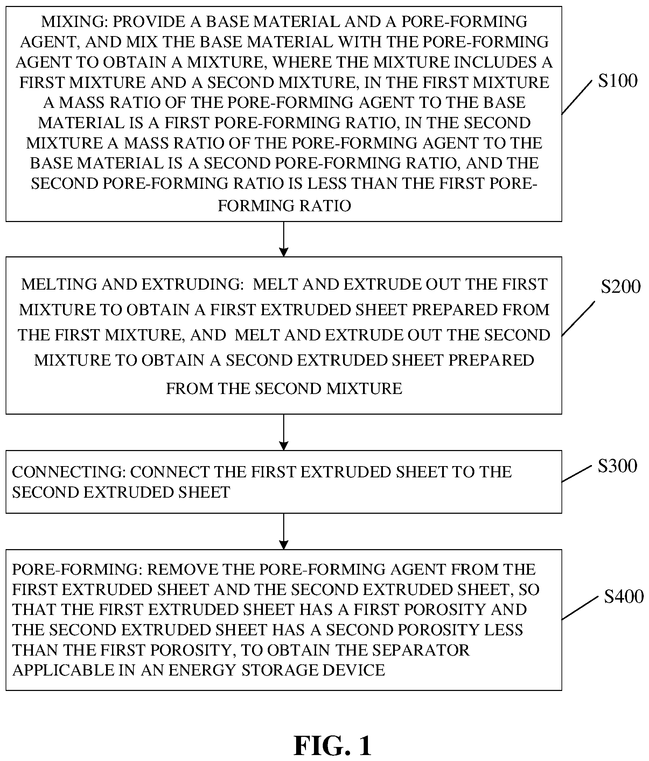

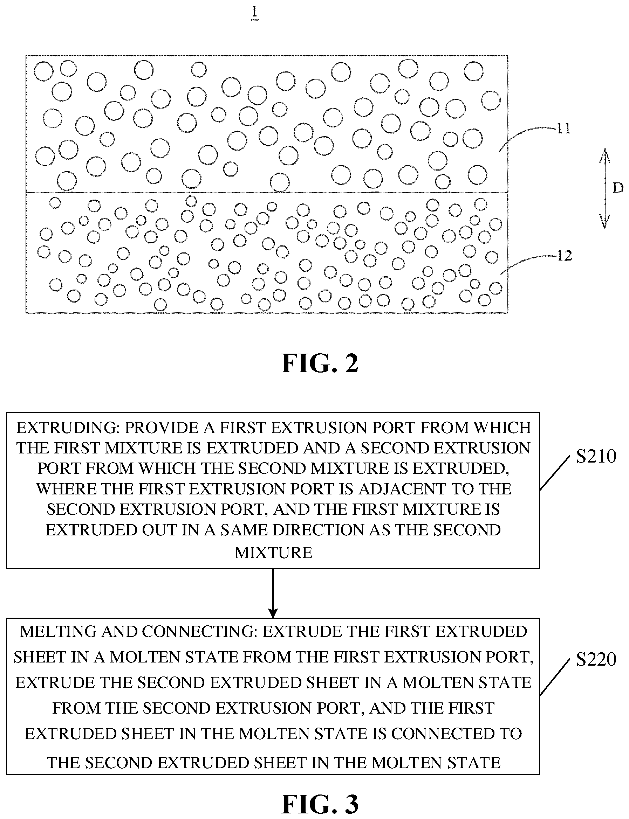

Referring to FIG. 1 and FIG. 2, FIG. 1 is a process flow chart of a method for manufacturing the separator according to an embodiment of the disclosure, and FIG. 2 is a schematic structural diagram of the separator according to an embodiment of the disclosure.

This embodiment provides a method for manufacturing the separator. The method includes the following.

At S100, mixing: a base material and a pore-forming agent are provided, and the base material is mixed with the pore-forming agent to obtain a mixture, where the mixture includes a first mixture and a second mixture, in the first mixture a mass ratio of the pore-forming agent to the base material is a first pore-forming ratio, in the second mixture a mass ratio of the pore-forming agent to the base material is a second pore-forming ratio, and the second pore-forming ratio is less than the first pore-forming ratio.

This embodiment provides the base material. The base material may be polyethylene. In one embodiment, the base material includes at least one of ultra-high-molecular-weight polyethylene or high-density polyethylene. In the case where the base material includes both the ultra-high-molecular-weight polyethylene and the high-density polyethylene, and a mass ratio of the ultra-high-molecular-weight polyethylene to the high-density polyethylene is equal to *X*1/*X*2, where *X*1 ranges from 0.5 to 1.5 and *X*2 ranges from 0.5 to 1.5.

Optionally, a molecular mass of the ultra-high-molecular-weight polyethylene is (3 × 10^6) ~ (5 × 10^6). A molecular mass of the high-density polyethylene is (3 × 10^5) ~ (5 × 10^5).

Optionally, the mass ratio of the ultra-high-molecular-weight polyethylene to the high-density polyethylene may be 0.5:0.5, 0.5:1, 0.5:1.5, 1:0.5, 1:1.5, 1.5:0.5, or 1.5:1. Preferably, the mass ratio of the ultra-high-molecular-weight polyethylene to the high-density polyethylene is 1:1.

In the case where the base material includes both the ultra-high-molecular-weight polyethylene and the high-density polyethylene, the ultra-high-molecular-weight polyethylene can provide the separator with better ductility, strength, toughness, and manufacturability, while the high-density polyethylene can provide the separator with high crystallinity, relatively high strength, and relatively high heat resistance. Therefore, by mixing the ultra-high-molecular-weight polyethylene with the high-density polyethylene, the processing performance of the separator can be improved, thereby reducing preparation difficulty and improving preparation efficiency.

This embodiment provides a pore-forming agent, where the pore-forming agent may be white oil. It is noted that, the white oil is also known as white mineral oil (petroleum). Optionally, the first pore-forming ratio is equal to *Y*1/*Y*2, where *Y*1 ranges from 80 to 85 and *Y2* ranges from 14 to 20. The second pore-forming ratio is less than the first pore-forming ratio. Further optionally, the second pore-forming ratio is equal to *Y*5/*Y*6*,* where *Y*5 ranges from 60 to 70 and *Y*6 ranges from 30 to 40.

In the case where the first pore-forming ratio is equal to *Y*1/*Y*2, where *Y*1 ranges from 80 to 85 and *Y*2 ranges from 14 to 20 and the second pore-forming ratio is equal to *Y*5/*Y*6*,* where *Y*5 ranges from 60 to 70 and *Y*6 ranges from 30 to 40, it not only lays a foundation for obtaining a separator with a preset high porosity and a preset low porosity, enabling the timely replenishment of electrolyte to the dry regions of the electrodes at the upper part of the energy storage device, and in turn balancing the overall kinetics of the upper and lower parts of the cell of the energy storage device, but also contributes to the stable operation of the separator within the energy storage device. If the first pore-forming ratio is too small or the second pore-forming ratio is too large, the separator may fail to timely replenish electrolyte to the dry regions of the electrodes at the upper part of the energy storage device and may also fail to balance the overall kinetics of the upper and lower parts of the cell of the energy storage device during long-term operation. If the first pore-forming ratio is too large or the second pore-forming ratio is too small, the high porosity of the separator will be too large or the low porosity of the separator will be too small, which is not conducive to the long-term stable operation of the separator within the energy storage device.

The first pore-forming ratio is equal to *Y*1/*Y*2, where *Y*1 ranges from 80 to 85 and *Y2* ranges from 14 to 20. In other words, in the first mixture, the mass ratio of the pore-forming agent to the base material is equal to *Y*1/*Y*2, where *Y*1 ranges from 80 to 85 and *Y2* ranges from 14 to 20.

Optionally, in the first mixture, the mass ratio of the pore-forming agent to the base material may be 80:14, 80:17, 80:20, 82:14, 82:17, 82:20, 85:14, 85:17, 85:20, etc.

The second pore-forming ratio is equal to *Y*5/*Y*6*,* where *Y*5 ranges from 60 to 70 and Y6 ranges from 30 to 40. In other words, in the second mixture, the mass ratio of the pore-forming agent to the base material is equal to *Y*5/*Y*6*,* where *Y*5 ranges from 60 to 70 and *Y*6 ranges from 30 to 40

Optionally, in the second mixture, the mass ratio of the pore-forming agent to the base material may be 60:30, 60:35, 60:40, 65:30, 65:35, 65:40, 70:30, 70:35, 70:40, etc.

Optionally, at S100, that the base material and the pore-forming agent are provided further includes the following. An antioxidant is provided, and the base material, the pore-forming agent, and the antioxidant are mixed to obtain the mixture.

Further optionally, the antioxidant may be a phenolic antioxidant, a phosphite antioxidant, or a hindered phenolic antioxidant.

Further optionally, a mass ratio of the antioxidant to the mixture is 0.2% ~ 2%.

At S200, melting and extruding: the first mixture is melted and extruded out to obtain a first extruded sheet prepared from the first mixture, and the second mixture is melted and extruded out to obtain a second extruded sheet prepared from the second mixture.

The first mixture is extruded out through the first extrusion port, and the second mixture is extruded out through the second extrusion port. By melting and extruding out the first mixture and the second mixture separately through different extrusion ports, a separator with various porosities can subsequently be obtained, thereby avoiding a problem of producing a separator with uniform porosity due to the complete mixing of the first mixture and the second mixture during the extrusion process. It can also be understood that the first mixture and the second mixture are extruded out through different flow channels of an extruder.

The obtained first extruded sheet and second extruded sheet can be in a molten state or in a cooled and solidified state, which is not limited in this embodiment. Furthermore, a width direction of the extruded sheet is the same as a direction perpendicular to a direction in which the mixture is extruded out.

At S300, connecting: the first extruded sheet is connected to the second extruded sheet.

For example, the first extruded sheet is directly connected to the second extruded sheet. Alternatively, the first extruded sheet is indirectly connected to the second extruded sheet through another extruded sheet.

For example, the entire first extruded sheet and the entire second extruded sheet can be brought into a molten state to allow the first extruded sheet to be connected to the second extruded sheet.

Alternatively, an edge of the first extruded sheet and an edge of the second extruded sheet can be brought into a molten state to allow the edge of the first extruded sheet to be connected to the edge of the second extruded sheet.

The first extruded sheet is connected to the second extruded sheet to form an extruded sheet to be processed, with the first extruded sheet and the second extruded sheet arranged in a width direction of the extruded sheet to be processed.

At S400, pore-forming: the pore-forming agent is removed from the first extruded sheet and the second extruded sheet, so that the first extruded sheet has a first porosity and the second extruded sheet has a second porosity less than the first porosity, to obtain the separator applicable to an energy storage device.

As illustrated in FIG. 2, the separator 1 has a first portion 11 and a second portion 12 arranged in a width direction of the separator 1 (as indicated by direction D in FIG. 2), where the first portion 11 is obtained from the first extruded sheet, and the second portion 12 is obtained from the second extruded sheet. It may be noted that the shape of pores in the separator is not limited in the disclosure. The pores can be circular, near-circular, square, polygonal, etc. The pores illustrated in the figures provided in the disclosure are merely for illustrative purposes.

The first porosity *P*1 satisfies: 45% *< P*1 ≤ 70%, and the second porosity *P*2 satisfies: 35% ≤ *P*2 < 40%. Further optionally, the first porosity may be 47%, 50%, 53%, 57%, 60%, 63%, 67%, 70%, etc. The second porosity may be 35%, 36%, 37%, 38%, 39%, etc.

The method for manufacturing the separator provided in this embodiment includes the following. Mixtures with different pore-forming ratios are prepared. The mixtures are melted and extruded out respectively to obtain the first extruded sheet and the second extruded sheet. Then, the first extruded sheet is connected to the second extruded sheet, and the pore-forming agent is removed from the extruded sheets, thereby obtaining a separator with various porosities. It may also be understood that the separator has both a portion with the first porosity which is relatively high and a portion with the second porosity which is relatively low.

The portion with the first porosity and the portion with the second porosity are arranged in the width direction of the separator in the energy storage device. The portion with the first porosity of the separator is disposed closer to the tab of the energy storage device than the portion with the second porosity, which not only increases the liquid absorption rate and liquid retention capacity of the separator at one end of the separator close to the tab, alleviating the unevenness of ion concentration reduction at the upper part of the energy storage device, but also is beneficial to timely replenish electrolyte to the dry regions of the electrodes located at the upper part of the energy storage device, ensuring that an active material on the electrodes can be re-wetted by the electrolyte to effectively participate in charge-discharge reactions of the energy storage device, ensuring the smoothness of the ion transport channel and sufficient electrochemical reaction active sites, and reducing the internal resistance of the energy storage device and improving the cycle performance of the energy storage device.

The portion with the second porosity of the separator is disposed away from the tab of the energy storage device, which can slow down the ion transport of the separator at one end of the separator corresponding to the lower part of the energy storage device, helping to balance the overall kinetics of the upper and lower parts of the cell of the energy storage device, alleviating the problem of insufficient electrolyte at the upper part of the energy storage device after long-term operation, and in turn improving the electrical performance of the energy storage device.

Optionally, after the extruded sheet to be processed is obtained by connecting the first extruded sheet and the second extruded sheet, the method further includes the following. The extruded sheet to be processed is subjected to a longitudinal stretching, followed by a first transverse stretching. Then, the pore-forming agent is removed from the first extruded sheet and the second extruded sheet. Subsequently, the extruded sheet to be processed is further subjected to a second transverse stretching, followed by a heating-setting treatment, thereby obtaining the separator.

The longitudinal stretching can be achieved by longitudinally rolling the sheet-like extruded material through a rolling mill to elongate the sheet-like extruded material. The first transverse stretching can be performed to achieve heat-setting. The second transverse stretching can eliminate the internal stress in the separator, thereby improving the thermal shrinkage performance of the separator, and achieving heat-setting.

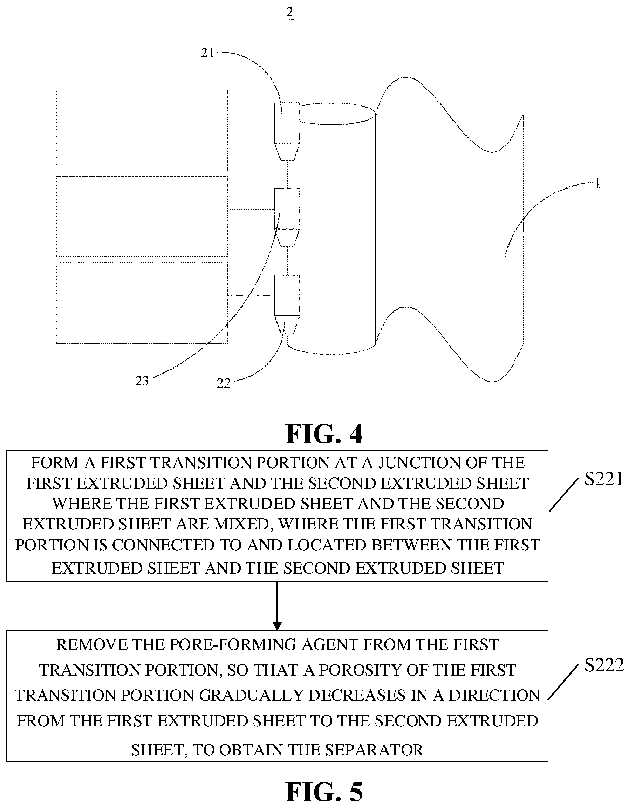

Referring to FIG. 3 and FIG. 4, FIG. 3 is a process flow chart of a method for manufacturing the separator according to an embodiment of the disclosure, and FIG. 4 is a schematic structural diagram of the extruder according to an embodiment of the disclosure. In one embodiment, the melting, the extruding, and the connecting are carried out as follows.

At S210, the melting and the extruding: a first extrusion port from which the first mixture is extruded and a second extrusion port from which the second mixture is extruded are provided, where the first extrusion port is adjacent to the second extrusion port, and the first mixture is extruded out in a same direction as the second mixture.

As illustrated in FIG. 4, the extruder 2 includes the first extrusion port 21 and the second extrusion port 22. For example, there is a gap between the first extrusion port 21 and the second extrusion port 22. Alternatively, the first extrusion port 21 abuts against the second extrusion port 22. The first mixture is extruded out in a same direction as the second mixture, which can also be understood as an opening of the first extrusion port 21 faces a same direction as an opening of the second extrusion port 22.

In this embodiment, by arranging the first extrusion port and the second extrusion port adjacent to each other and making the first mixture to be extruded out in a same direction as the second mixture, the first extruded sheet extruded from the first extrusion port can quickly contact the second extruded sheet extruded from the second extrusion port, providing a foundation for subsequently connecting the first extruded sheet to the second extruded sheet.

At S220, the connecting: the first extruded sheet in a molten state is obtained by extruding the first mixture from the first extrusion port, the second extruded sheet in a molten state is obtained by extruding the second mixture from the second extrusion port, and the first extruded sheet in the molten state is connected to the second extruded sheet in the molten state.

In this embodiment, the first extruded sheet just extruded from the first extrusion port is in the molten state, and the second extruded sheet just extruded from the second extrusion port is in the molten state. Therefore, the first extruded sheet can quickly contact and connect with the second extruded sheet.

In this embodiment, by adjusting positions of the extrusion ports, directions in which the mixtures are extruded out, and states of the extruded sheets, the first extruded sheet and the second extruded sheet can be quickly connected together as soon as the first mixture and the second mixture are just extruded out as extruded sheets, thereby simplifying the manufacturing steps and improving the manufacturing efficiency.

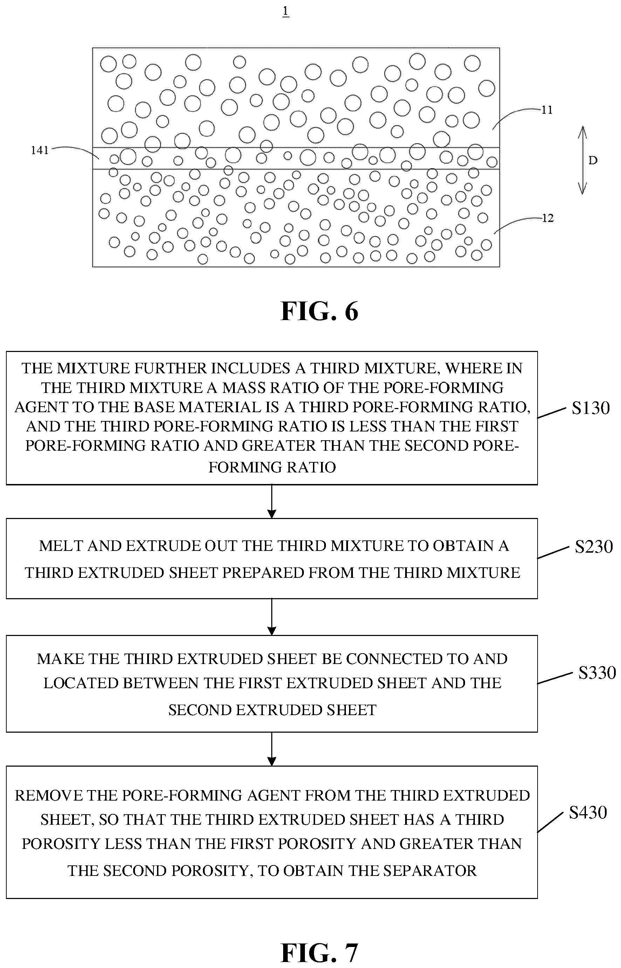

Referring to FIG. 5 and FIG. 6, FIG. 5 is a process flow chart of a method for manufacturing a separator according to an embodiment of the disclosure, and FIG. 6 is a schematic structural diagram of a separator according to an embodiment of the disclosure. In one embodiment, the connecting include the following.

At S221, a first transition portion is formed at a junction of the first extruded sheet and the second extruded sheet where the first extruded sheet and the second extruded sheet are mixed, where the first transition portion is connected to and located between the first extruded sheet and the second extruded sheet.

Since both the first extruded sheet and the second extruded sheet are in the molten state during the process of connecting the first extruded sheet to the second extruded sheet, by controlling the states of the first extruded sheet and the second extruded sheet during this process, the first transition portion can be formed at the junction of the first extruded sheet and the second extruded sheet where part of the first extruded sheet and part of the second extruded sheet are mixed.

The pore-forming further includes the following.

At S222, the pore-forming agent is removed from the first transition portion, so that a porosity of the first transition portion gradually decreases in a direction from the first extruded sheet to the second extruded sheet, to obtain the separator.

As illustrated in FIG. 6, part of the first transition portion 141 close to the first extruded sheet has a greater porosity than part of the first transition portion 141 close to the second extruded sheet. In other words, part of the first transition portion 141 close to the first extruded sheet has a greater porosity than part of the first transition portion 141 away from the first extruded sheet. That is, the first transition portion 141 gradually varies in porosity, exhibiting a gradient porosity.

By controlling the states of the first extruded sheet and the second extruded sheet during the process of connecting the first extruded sheet to the second extruded sheet, the first transition portion is formed where part of the first extruded sheet and part of the second extruded sheet are mixed. As such, there is no abrupt difference in porosity between the first extruded sheet and the second extruded sheet. Instead, the first transition portion with gradient porosity is formed for transition, which enhances the stability of the separator. When the separator is applied to an energy storage device, it is beneficial to timely replenishing the electrolyte to the dry region of the electrode at the upper part of the energy storage device, helping to balance the overall kinetics of the upper and lower parts of the cell of the energy storage device, and in turn improving the electrical performance and stability of the energy storage device.

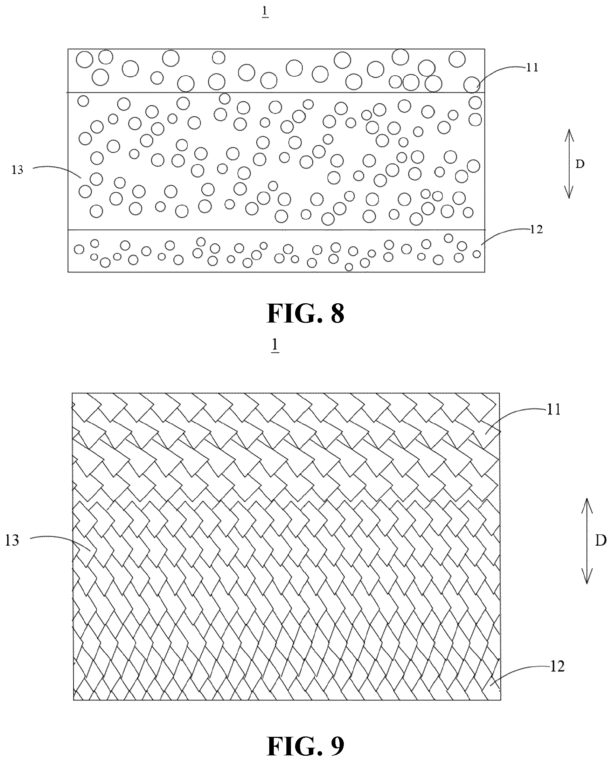

Referring to FIGS. 7 to 9, FIG. 7 is a process flow chart of a method for manufacturing the separator according to an embodiment of the disclosure, FIG. 8 is a schematic structural diagram of the separator according to an embodiment of the disclosure, and FIG. 9 is a schematic structural diagram of the separator according to an embodiment of the disclosure.

In one embodiment, the mixing further includes the following.

At S130, the mixture further includes a third mixture, where in the third mixture a mass ratio of the pore-forming agent to the base material is a third pore-forming ratio, and the third pore-forming ratio is less than the first pore-forming ratio and greater than the second pore-forming ratio.

Optionally, the third pore-forming ratio is equal to *Y3*/*Y4,* where *Y*3 ranges from 70 to 80 and *Y*4 ranges from 20 to 30. In other words, in the third mixture, the mass ratio of the pore-forming agent to the base material is equal to *Y3*/*Y4,* where *Y*3 ranges from 70 to 80 and *Y*4 ranges from 20 to 30.

Optionally, in the third mixture, the mass ratio of the pore-forming agent to the base material may be 70:20, 70:25, 70:30, 75:20, 75:25, 75:30, 80:20, 80:25, or 80:30.

Further optionally, the first pore-forming ratio is equal to *Y*1/*Y*2, where *Y*1 ranges from 80 to 85 and *Y*2 ranges from 14 to 20, the third pore-forming ratio is equal to *Y3*/*Y4,* where *Y*3 ranges from 70 to 80 and *Y*4 ranges from 20 to 30, and the second pore-forming ratio is equal to *Y*5/*Y*6*,* where *Y*5 ranges from 60 to 70 and *Y*6 ranges from 30 to 40.

In the case where the third pore-forming ratio is equal to *Y3*/*Y4,* where *Y*3 ranges from 70 to 80 and *Y*4 ranges from 20 to 30, it not only provides a foundation for obtaining a separator with a preset medium porosity but also offers a transition between a portion formed from the first mixture and a portion formed from the second mixture. On the one hand, a portion with the preset medium porosity helps to maintain the stability of the energy storage device throughout the entire operating cycle, thereby improving the electrical performance of the energy storage device. On the other hand, it prevents an abrupt difference in porosity between a high-porosity portion formed from the first mixture and a low-porosity portion formed from the second mixture, thereby improving the stability of the separator.

Optionally, in the first mixture, the ultra-high-molecular-weight polyethylene is 7 ~ 10 parts by weight. The high-density polyethylene is 7 ~ 10 parts by weight. The antioxidant is 0.2 ~ 1 parts by weight. The white oil is 80 ~ 85 parts by weight.

In the third mixture, the ultra-high-molecular-weight polyethylene is 10 ~ 15 parts by weight. The high-density polyethylene is 10 ~ 15 parts by weight. The antioxidant is 0.2 ~ 1 parts by weight. The white oil is 70 ~ 80 parts by weight.

In the second mixture, the ultra-high-molecular-weight polyethylene is 15 ~ 20 parts by weight. The high-density polyethylene is 15 ~ 20 parts by weight. The antioxidant is 0.2 ~ 1 parts by weight. The white oil is 60 ~ 70 parts by weight.

The melting and the extruding further includes the following.

At S230, the third mixture is melted and extruded out to obtain a third extruded sheet prepared from the third mixture.

As illustrated in FIG. 4, the extruder 2 further includes a third extrusion port 23. The third mixture is extruded from the third extrusion port 23. Optionally, the first extrusion port 21, the third extrusion port 23, and the second extrusion port 22 are arranged in sequence. The first mixture is extruded out in a same direction as the third mixture and the second mixture.

The connecting further includes the following.

At S330, the third extruded sheet is connected to and located between the first extruded sheet and the second extruded sheet.

One side of the third extruded sheet is connected to the first extruded sheet, and the other side of the third extruded sheet is connected to the second extruded sheet. The first extruded sheet, the third extruded sheet, and the second extruded sheet are connected in sequence to form the extruded sheet to be processed, with the first extruded sheet, the third extruded sheet, and the second extruded sheet arranged in the width direction of the extruded sheet to be processed.

The pore-forming further includes the following.

At S430, the pore-forming agent is removed from the third extruded sheet, so that the third extruded sheet has a third porosity less than the first porosity and greater than the second porosity, to obtain the separator 1.

As illustrated in FIG. 8, the separator 1 has the first portion 11, a third portion 13, and the second portion 12 arranged in the width direction of separator (as illustrated by direction D in FIG. 8), where the first portion 11 is obtained from the first extruded sheet, the third portion 13 is obtained from the third extruded sheet, and the second portion 12 is obtained from the second extruded sheet.

The third porosity *P*3 is 40% ≤ *P3* ≤ 45%. Further optionally, the third porosity may be 40%, 41%, 42%, 43%, or 44%. It may be noted that the porosity of 40% ~ 45% is a porosity of the separator in the energy storage device that is most favorable for maximizing the electrical performance of the energy storage device.

In this embodiment, by arranging the third extruded sheet between the first extruded sheet and the second extruded sheet, and setting the third porosity of the third extruded sheet to be between the first porosity and the second porosity, the separator has a portion with the first porosity, which is relatively high, a portion with the third porosity, which is medium, and a portion with the second porosity, which is relatively low.

In the case where the separator is applied to an energy storage device, the portion with the first porosity, the portion with the third porosity, and the portion with the second porosity are arranged in the width direction of the separator. The portion with the first porosity and the portion with the second porosity enable the timely replenishment of electrolyte to the dry region of the electrode at the upper part of the energy storage device, helping to balance the overall kinetics of the upper and lower parts of the cell of the energy storage device, and alleviating the problem of insufficient electrolyte at the upper part of the energy storage device after long-term operation. Meanwhile, the portion with the third porosity helps to maintain the stability of the energy storage device throughout the entire operating cycle, thereby improving the electrical performance of the energy storage device.

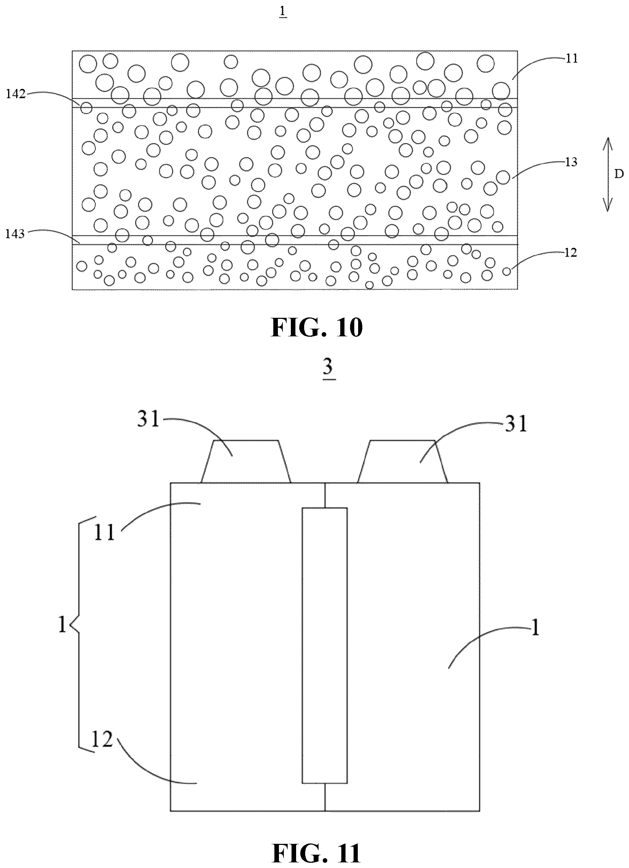

Referring to FIG. 10, FIG. 10 is a schematic structural diagram of the separator according to an embodiment of the disclosure. Optionally, a second transition portion 142 is formed at a junction of the first extruded sheet and the third extruded sheet where the first extruded sheet and the third extruded sheet are mixed, where the second transition portion 142 is connected between the first extruded sheet and the third extruded sheet. A third transition portion 143 is formed at a junction of the third extruded sheet and the second extruded sheet where the third extruded sheet and the second extruded sheet are mixed, where the third transition portion 143 is connected between the third extruded sheet and the second extruded sheet.

The pore-forming agent is removed from the second transition portion 142 and the third transition portion 143, so that a porosity of the second transition portion 142 gradually decreases in a direction from the first extruded sheet to the third extruded sheet, and a porosity of the third transition portion 143 gradually decreases in a direction from the third extruded sheet to the second extruded sheet, thereby obtaining the separator 1.

Optionally, during the process of obtaining the first extruded sheet, the second extruded sheet, and the third extruded sheet, the extruder exerts a greater extrusion pressure to the third mixture than the first mixture, and exerts a greater extrusion pressure to the third mixture than the second mixture.

By adjusting the extrusion pressure applied by the extruder to each mixture, the third extruded sheet and the first extruded sheet can be quickly connected together, as well as the third extruded sheet and the second extruded sheet can be quickly connected together, as soon as the first mixture, the third mixture, and the second mixture are just extruded out as extruded sheets, thereby simplifying the manufacturing steps and improving the manufacturing efficiency.

Referring to FIG. 2, the disclosure further provides a separator 1. The separator 1 is applicable to an energy storage device. The separator 1 has a first portion 11 and a second portion 12 arranged in a width direction of the separator 1, where the first portion 11 has a first porosity, the second portion 12 has a second porosity less than the first porosity, and the first portion is closer to a tab of the energy storage device than the second portion 12.

Optionally, a thickness of the separator 1 may range from 7 µm to 20 µm. Further optionally, the thickness of the separator 1 may be 7 µm, 10 µm, 13 µm, 15 µm, 18 µm, or 20 µm.

In the case where the thickness of the separator 1 ranges from 7 µm to 20 µm, the separator 1 can have a high liquid retention capacity, structural strength, and insulation performance, and can also provide the energy storage device with a high energy density. If the thickness of the separator 1 is less than 7 µm, the separator 1 will be too thin, resulting in reduced liquid retention capacity, structural strength, and insulation performance. If the thickness of the separator 1 is greater than 20 µm, the separator 1 will be too thick, resulting in an increased resistance of the energy storage device and a reduced energy density of the energy storage device.

The separator 1 provided in this embodiment can be manufactured by the method for manufacturing the separator 1 provided by the disclosure. The first portion 11 of the separator 1 is obtained from the first extruded sheet, and the second portion 12 is obtained from the second extruded sheet.

The separator 1 provided in this embodiment has the portion with the first porosity and the portion with the second porosity arranged in the width direction of the separator 1. The portion with the first porosity of the separator 1 is disposed closer to the tab of the energy storage device than the portion with the second porosity, which not only increases the liquid absorption rate and liquid retention capacity of the separator at one end of the separator close to the tab, alleviating the unevenness of ion concentration reduction at the upper part of the energy storage device, but also is beneficial to timely replenishing the electrolyte to the dry region of the electrode located at the upper part of the energy storage device, ensuring that the active material on the electrode can be re-wetted by the electrolyte to effectively participate in charge-discharge reactions of the energy storage device, ensuring the smoothness of the ion transport channel and sufficient electrochemical reaction active sites, and reducing the internal resistance of the energy storage device and improving the cycle performance of the energy storage device. The portion with the second porosity of the separator 1 is disposed away from the tab of the energy storage device, which can slow down the ion transport of the separator 1 at one end of the separator corresponding to the lower part of the energy storage device, helping to balance the overall kinetics of the upper and lower parts of the cell of the energy storage device, alleviating the problem of insufficient electrolyte at the upper part of the energy storage device after long-term operation, and in turn improving the electrical performance of the energy storage device.

In the case where the first porosity *P*1 satisfies: 45% *< P*1 ≤ 70%, and the second porosity *P*2 satisfies: 35% ≤ *P*2 < 40%, it not only enables the timely replenishment of electrolyte to the dry region of the electrode at the upper part of the energy storage device, helping to balance the overall kinetics of the upper and lower parts of the cell in the energy storage device, but also facilitates the stable operation of the separator 1 in the energy storage device. If the first porosity is too small or the second porosity is too large, the separator 1 will not be able to timely replenish electrolyte to the dry region of the electrode at the upper part of the energy storage device during long-term operation or balance the overall kinetics of the upper and lower parts of the cell in the energy storage device. If the first porosity is too large or the second porosity is too small, the separator 1 will have a high porosity which is excessively large or a low porosity which is excessively small, which is not conducive to the long-term stable operation of the separator 1 in the energy storage device.

Referring to FIG. 6, in one embodiment, the separator 1 further includes the first transition portion 141, where the first transition portion 141 is connected to and located between the first portion 11 and the second portion 12, and the porosity of the first transition portion 141 gradually decreases in the direction from the first portion 11 to the second portion 12.

Part of the first transition portion 141 close to the first portion 11 has a greater porosity than part of the first transition portion 141 close to the second portion 12. In other words, part of the first transition portion 141 close to the first portion 11 has a greater porosity than part of the first transition portion 141 away from the first portion 11. That is, the first transition portion 141 gradually varies in porosity, forming a gradient porosity.

This embodiment ensures that there is no abrupt difference in porosity between the first portion 11 and the second portion 12. Instead, the first transition portion 141 with gradient porosity is formed for transition, thereby improving the stability of the separator 1. When the separator 1 is applied to an energy storage device, it not only enables replenishment of electrolyte to the dry region of the electrode at the upper part of the energy storage device but also is beneficial to balancing the overall kinetics of the upper and lower parts of the cell in the energy storage device, thereby improving the electrical performance and the stability of the energy storage device.

Referring to FIG. 8 and FIG. 9, in one embodiment, the separator 1 further includes a third portion 13 located between the first portion 11 and the second portion 12, where the third portion 13 has the third porosity, the third porosity is less than the first porosity and greater than the second porosity.

The separator 1 provided in this embodiment can be manufactured by the method for manufacturing the separator 1 provided by the disclosure. The first portion 11 of the separator 1 is obtained from the first extruded sheet, the third portion 13 is obtained from the third extruded sheet, and the second portion 12 is obtained from the second extruded sheet. It may be noted that the porosity of 40% ~ 45% is a porosity of the separator 1 in the energy storage device that is most favorable for maximizing the electrical performance of the energy storage device.

In the case where the separator 1 is applied to an energy storage device, the first portion 11 with the first porosity, the third portion 13 with the third porosity, and the second portion 12 with the second porosity are arranged in the width direction of the separator 1. The first portion 11 and the second portion 12 enables the timely replenishment of electrolyte to the dry region of the electrode at the upper part of the energy storage device, helping to balance the overall kinetics of the upper and lower parts of the cell in the energy storage device, and alleviating the problem of insufficient electrolyte at the upper part of the energy storage device after long-term operation. Meanwhile, the third portion 13 helps to maintain the stability of the energy storage device throughout the entire operating cycle, thereby improving the electrical performance of the energy storage device.

Optionally, referring to FIG. 10, the separator 1 further includes the second transition portion 142 and the third transition portion 143. The second transition portion 142 is connected to and located between the first portion 11 and the third portion 13, where the porosity of the second transition portion 142 gradually decreases in a direction from the first portion 11 to the third portion 13. The third transition portion 143 is connected to and located between the third portion 13 and the second portion 12, where the porosity of the third transition portion 143 gradually decreases in a direction from the third portion 13 to the second portion 12.

Referring to FIG. 8 and FIG. in the width direction of the separator 1, a ratio of a width of the first portion 11, a width of the third portion 13, and a width of the second portion 12 is *W*1 W3:W2 where *W*1 ranges from 0.05 to 0.1, W3 ranges from 0.8 to 0.9, and W2 ranges from 0.05 to 0.1.

Optionally, the ratio of the width of the first portion 11, the width of the third portion 13, and the width of the second portion 12 may be 0.05:0.8:0.05, 0.05:0.85:0.05, 0.05:0.9:0.05, 0.05:0.8:0.08, 0.05:0.8:0.1, 0.08:0.8:0.05, 0.1:0.8:0.05, etc.

The first portion 11 with high porosity and the second portion 12 with low porosity primarily help to timely replenish electrolyte to the dry region of the electrode at the upper part of the energy storage device and to balance the overall kinetics of the upper and lower parts of the cell. Therefore, in terms of width proportion of the separator 1, both the width of the first portion 11 and the width of the second portion 12 are smaller than the width of the third portion 13. This not only enables the timely replenishment of electrolyte to the dry region of the electrode at the upper part of the energy storage device, helping to balance the overall kinetics of the upper and lower parts of the cell, but also reduces manufacturing costs. The third portion 13 with a medium porosity primarily help to maintain the stability of the cell of the energy storage device throughout the entire operational cycle. Therefore, in terms of width proportion of the separator 1, the width of the third portion 13 is the largest, thereby enhancing the stability of the energy storage device throughout the entire operational cycle.

Referring to FIG. 11, FIG. 11 is a schematic structural diagram of an energy storage device 3 according to an embodiment of the disclosure. The disclosure further provides the energy storage device 3, which includes the tab 31, the electrolyte, the positive electrode, the negative electrode, and the separator 1 as described above, where the first portion 11 of the separator 1 is closer to the tab 31 than the second portion 12 of the separator 1.

The energy storage device 3 may be implemented as multiple energy storage devices 3. The multiple energy storage devices 3 are connected in series or parallel, and supported by isolation plates and electrically connected to each other (not illustrated). In this embodiment, "multiple" refers to two or more. An energy storage box may be provided at the exterior of the energy storage device 3. The energy storage device 3 may be accommodated in the energy storage box.

It may be understood that the energy storage device 3 may be but is not limited to a battery cell, a battery module, a battery pack, a battery system, etc. When the energy storage device 3 is a battery cell, the energy storage device 3 may be at least one of a cylindrical battery, a prismatic battery, etc. The practical application form of the energy storage device 3 provided in the embodiments of the disclosure may include but is not limited to the listed products, and may also be other application forms. The embodiments of the disclosure do not strictly limit the application forms of the energy storage device 3.

The energy storage device 3 provided in this embodiment, by adopting the separator 1 described above, has the portion with the first porosity and the portion with the second porosity arranged in the width direction of the separator 1. The portion with the first porosity of the separator 1 is disposed closer to the tab 31 of the energy storage device 3 than the portion with the second porosity, which not only increases the liquid absorption rate and liquid retention capacity of the separator 1 at one end of the separator 1 close to the tab 31, alleviating the unevenness of ion concentration reduction at the upper part of the energy storage device 3, but also is beneficial to timely replenishing electrolyte to the dry region of the electrode located at the upper part of the energy storage device 3, ensuring that the active material on the electrode can be re-wetted by the electrolyte to effectively participate in charge-discharge reactions of the energy storage device 3, ensuring the smoothness of the ion transport channel and sufficient electrochemical reaction active sites, and reducing the internal resistance of the energy storage device 3 and improving the cycle performance of the energy storage device 3. The portion with the second porosity of the separator 1 is disposed away from the tab 31 of the energy storage device 3, which can slow down the ion transport of the separator 1 at one end of the separator 1 corresponding to the lower part of the energy storage device 3, helping to balance the overall kinetics of the upper and lower parts of the cell of the energy storage device 3, alleviating the problem of insufficient electrolyte at the upper part of the energy storage device 3 after long-term operation, and in turn improving the electrical performance of the energy storage device 3.

The disclosure also provides an electricity-consumption apparatus, which includes an apparatus body and the energy storage device as described above, where the energy storage device is configured to power the apparatus body.

Optionally, the electricity-consumption apparatus in the embodiments of the disclosure may be but is not limited to portable electronic devices such as mobile phones, tablets, laptops, desktop computers, smart toys, smart bracelets, smartwatches, e-readers, game consoles, toys, etc. Alternatively, the electricity-consumption apparatus in the embodiments of the disclosure may be large devices such as energy storage battery cabinets, electric vehicles, electric cars, ships, spacecraft, etc.

It may be understood that the electricity-consumption apparatus described in this embodiment is merely one form of the electricity-consumption apparatus to which the energy storage device is applied and should not be understood as limiting the electricity-consumption apparatus provided by the disclosure or the energy storage device provided by various embodiments of the disclosure.

The electricity-consumption apparatus provided in this embodiment adopts the energy storage device provided in the disclosure, where the separator has the portion with the first porosity and the portion with the second porosity arranged in the width direction of the separator. The portion with the first porosity of the separator is disposed closer to the tab of the energy storage device than the portion with the second porosity, which not only increases the liquid absorption rate and liquid retention capacity of the separator at one end of the separator close to the tab, alleviating the unevenness of ion concentration reduction at the upper part of the energy storage device, but also is beneficial to timely replenishing the electrolyte to the dry region of the electrode located at the upper part of the energy storage device, ensuring that the active material on the electrode can be re-wetted by the electrolyte to effectively participate in charge-discharge reactions of the energy storage device, ensuring the smoothness of the ion transport channel and sufficient electrochemical reaction active sites, and reducing the internal resistance of the energy storage device and improving the cycle performance of the energy storage device. The portion with the second porosity of the separator is disposed away from the tab of the energy storage device, which can slow down the ion transport of the separator at one end of the separator corresponding to the lower part of the energy storage device, helping to balance the overall kinetics of the upper and lower parts of the cell of the energy storage device, alleviating the problem of insufficient electrolyte at the upper part of the energy storage device after long-term operation, and in turn improving the electrical performance of the energy storage device. When the energy storage device powers the apparatus body, the energy storage device can provide a stable power supply to the apparatus body.

To make the above details and operations of the disclosure clear to those of ordinary skill in the art, the following examples are provided to illustrate the above technical solutions.

After mixing the ultra-high-molecular-weight polyethylene, the high-density polyethylene, the antioxidant, and the white oil in different ratios, the first mixture, the second mixture, and the third mixture are obtained respectively. The first mixture, the second mixture, and the third mixture are extruded out through a multi-channel extruder to form molten extruded sheets, which are then subjected to longitudinal stretching to obtain longitudinally stretched films.

The longitudinally stretched film obtained from the above steps is subjected to a first transverse stretching, followed by the extraction and removal of white oil, then subjected to a second transverse stretching, followed by a heat-setting treatment, thereby obtaining the separator.

The white oil (molecular weight of 500), the ultra-high-molecular-weight polyethylene resin (weight-average molecular weight of 3,000,000), the high-density polyethylene resin (weight-average molecular weight of 500,000), and the antioxidant are mixed in a ratio of 8.0:0.95:0.95:0.1 to obtain the first mixture.

The white oil (molecular weight of 500), the ultra-high-molecular-weight polyethylene resin (weight-average molecular weight of 3,000,000), the high-density polyethylene resin (weight-average molecular weight of 500,000), and the antioxidant are mixed in a ratio of 7.5:1.19:1.19:0.12 to obtain the third mixture.

The white oil (molecular weight of 500), the ultra-high-molecular-weight polyethylene resin (weight-average molecular weight of 3,000,000), the high-density polyethylene resin (weight-average molecular weight of 500,000), and the antioxidant 1010 are mixed in a ratio of 6.8:1.5:1.5:0.2 to obtain the second mixture.

The first portion, the third portion, and the second portion of the manufactured separator are tested for porosity, with three sampling points taken from each portion for testing. The porosity test results of the separator are illustrated in Table 1.

**Table 1: Porosity Test Results of Separator**

| Separator | Porosity of Sampling Point 1 (%) | Porosity of Sampling Point 2 (%) | Porosity of Sampling Point 3 (%) |
|---|---|---|---|
| First portion | 65.3 | 66.1 | 64.7 |
| Third portion | 43.6 | 44.2 | 42.9 |
| Second portion | 38.2 | 38.5 | 39.1 |

After long-term operation of the cell, ion transport obstruction may occur at the upper part of the cell in the energy storage device. By using high porosity (45% ~ 70%) at an upper part of the separator to match the upper part of the cell, it not only improves the liquid absorption rate and retention capability of the separator at one end of the separator close to the tab, alleviating the unevenness of ion concentration reduction at the upper part of the energy storage device, but also timely replenishes electrolyte to the dry region of the electrode at the upper part of the energy storage device, ensuring that the active material on the electrode can be re-wetted by the electrolyte to effectively participate in charging and discharging reactions of the energy storage device. Additionally, a middle part of the separator is set to have a medium porosity (40% ~ 45%), ensuring the stability of ion transport of the cell after long-term operation. The electrolyte is sufficient at the lower part of the cell, with smooth ion transport, to match the transport capacity at the middle and upper parts of the cell, achieving consistent overall transport capacity of the cell. The lower part of the separator has a low porosity (35% ~ 40%).

In the disclosure, to obtain a separator with a gradient porosity in the width direction, different pore-forming ratios are designed during the raw material mixing stage. Meanwhile, the extruder is configured with multiple channels rather than a single channel, different mixtures are extruded from the multiple channels to obtain the extruded sheets, which are then connected to obtain the separator with gradient porosity.

## Claims

1. An energy storage device (3) comprising a separator (1), a tab (31), an electrolyte, a positive electrode, and a negative electrode, wherein
the separator (1) has a first portion (11) and a second portion (12) arranged in a width direction of the separator (1), wherein the first portion (11) has a first porosity *P*1, the second portion (12) has a second porosity *P*2 less than the first porosity *P*1, and the first portion (11) is closer to the tab (31) of the energy storage device (3) than the second portion (12);
the first porosity *P*1 satisfies: 45% < *P1* ≤ 70%, and the second porosity *P*2 satisfies: 35% ≤ *P2* < 40%;
the separator (1) further has a third portion (13) located between the first portion (11) and the second portion (12), wherein the third portion (13) has a third porosity *P*3, and the third porosity *P*3 is less than the first porosity *P*1 and greater than the second porosity *P*2;
the third porosity *P*3 satisfies: 40% ≤ *P3* ≤ 45%; and
in the width direction of the separator (1), a ratio of a width of the first portion (11), a width of the third portion (13), and a width of the second portion (12) is *W*1:*W*3*:W*2*,* wherein *W*1 ranges from 0.05 to 0.1, *W*3 ranges from 0.8 to 0.9, and *W*2 ranges from 0.05 to 0.1.

2. The energy storage device (3) according to claim 1, wherein the separator (1) further has a first transition portion, wherein the first transition portion is connected to and located between the first portion (11) and the second portion (12), and a porosity of the first transition portion gradually decreases in a direction from the first portion (11) to the second portion (12).

3. A method for manufacturing an energy storage device (3), comprising:
mixing, comprising: providing a base material and a pore-forming agent, and mixing the base material with the pore-forming agent to obtain a mixture, wherein the mixture comprises a first mixture and a second mixture, wherein in the first mixture a mass ratio of the pore-forming agent to the base material is a first pore-forming ratio, in the second mixture a mass ratio of the pore-forming agent to the base material is a second pore-forming ratio, and the second pore-forming ratio is less than the first pore-forming ratio;
melting and extruding, comprising: melting and extruding out the first mixture to obtain a first extruded sheet prepared from the first mixture, and melting and extruding out the second mixture to obtain a second extruded sheet prepared from the second mixture;
connecting, comprising: connecting the first extruded sheet to the second extruded sheet;
pore-forming, comprising: removing the pore-forming agent from the first extruded sheet and the second extruded sheet, so that the first extruded sheet has a first porosity *P*1 and the second extruded sheet has a second porosity *P*2 less than the first porosity *P*1, to obtain the separator (1); and
forming the energy storage device (3) comprising the separator (1), a tab (31), an electrolyte, a positive electrode, and a negative electrode, wherein the separator (1) has a first portion (11) and a second portion (12) arranged in a width direction of the separator (1), the first portion (11) has a first porosity *P*1, the second portion (12) has a second porosity *P*2 less than the first porosity *P*1, and the first portion (11) is closer to the tab (31) of the energy storage device (3) than the second portion (12);
wherein the first porosity *P*1 satisfies: 45% < *P*1 ≤ 70%, and the second porosity *P*2 satisfies: 35% ≤ *P*2 < 40%;
wherein the separator (1) further has a third portion (13) located between the first portion (11) and the second portion (12), wherein the third portion (13) has a third porosity *P*3, and the third porosity *P*3 is less than the first porosity *P*1 and greater than the second porosity *P*2;
wherein the third porosity *P*3 satisfies: 40% ≤ *P3* ≤ 45%; and
wherein in the width direction of the separator (1), a ratio of a width of the first portion (11), a width of the third portion (13), and a width of the second portion (12) is *W*1:*W3:W*2*,* wherein *W*1 ranges from 0.05 to 0.1, *W*3 ranges from 0.8 to 0.9, and *W*2 ranges from 0.05 to 0. 1.

4. The method according to claim 3, wherein
the melting and the extruding comprise: providing a first extrusion port (21) from which the first mixture is extruded and a second extrusion port (22) from which the second mixture is extruded, wherein the first extrusion port (21) is adjacent to the second extrusion port (22), and the first mixture is extruded out in a same direction as the second mixture; and
the connecting comprises: obtaining the first extruded sheet in a molten state by extruding the first mixture from the first extrusion port (21), obtaining the second extruded sheet in a molten state by extruding the second mixture from the second extrusion port (22), and connecting the first extruded sheet in the molten state to the second extruded sheet in the molten state.

5. The method according to claim 3 or 4, wherein
the connecting comprises: forming a first transition portion (141) at a junction of the first extruded sheet and the second extruded sheet where the first extruded sheet and the second extruded sheet are mixed, wherein the first transition portion (141) is connected to and located between the first extruded sheet and the second extruded sheet; and
the pore-forming further comprises: removing the pore-forming agent from the first transition portion (141), so that a porosity of the first transition portion (141) gradually decreases in a direction from the first extruded sheet to the second extruded sheet, to obtain the separator (1).

6. The method according to any one of claims 3 to 5, wherein
the mixture further comprises a third mixture, wherein in the third mixture a mass ratio of the pore-forming agent to the base material is a third pore-forming ratio, and the third pore-forming ratio is less than the first pore-forming ratio and greater than the second pore-forming ratio;
the melting and the extruding further comprise: melting and extruding out the third mixture to obtain a third extruded sheet prepared from the third mixture;
the connecting further comprises: making the third extruded sheet be connected to and located between the first extruded sheet and the second extruded sheet; and
the pore-forming further comprises: removing the pore-forming agent from the third extruded sheet, so that the third extruded sheet has a third porosity *P*3 less than the first porosity *P*1 and greater than the second porosity *P*2, to obtain the separator (1).

7. The method according to claim 6, wherein the first pore-forming ratio is equal to *Y*1/*Y*2, wherein *Y*1 ranges from 80 to 85 and *Y*2 ranges from 14 to 20; the third pore-forming ratio is equal to *Y*3/*Y*4, wherein *Y*3 ranges from 70 to 80 and *Y4* ranges from 20 to 30; and the second pore-forming ratio is equal to *Y*5/*Y*6*,* wherein *Y*5 ranges from 60 to 70 and Y6 ranges from 30 to 40.

8. The method according to any one of claims 3 to 7, wherein
the base material comprises at least one of ultra-high-molecular-weight polyethylene or high-density polyethylene; or
the base material comprises both the ultra-high-molecular-weight polyethylene and the high-density polyethylene, and a mass ratio of the ultra-high-molecular-weight polyethylene to the high-density polyethylene is equal to *X*1/*X*2, wherein *X*1 ranges from 0.5 to 1.5 and *X*2 ranges from 0.5 to 1.5.

9. An electricity-consumption apparatus, comprising:
a device body; and
the energy storage device (3) according to claim 1 or 2, wherein the energy storage device (3) is configured to power the device body.

## Patentansprüche

1. . Energiespeichervorrichtung (3), umfassend einen Separator (1), eine Lasche (31), einen Elektrolyten, eine positive Elektrode und eine negative Elektrode, wobei
der Separator (1) einen ersten Abschnitt (11) und einen zweiten Abschnitt (12) aufweist, die in einer Breitenrichtung des Separators (1) angeordnet sind, wobei der erste Abschnitt (11) eine erste Porosität *P*1 aufweist, der zweite Abschnitt (12) eine zweite Porosität *P*2 aufweist, die kleiner ist als die erste Porosität *P* 1, und der erste Abschnitt (11) näher an der Lasche (31) der Energiespeichervorrichtung (3) liegt als der zweite Abschnitt (12);
die erste Porosität *P*1 erfüllt: 45 % < *P*1 ≤ 70 %, und die zweite Porosität *P*2 erfüllt: 35 % ≤ *P*2 < 40 %;
der Separator (1) ferner einen dritten Abschnitt (13) aufweist, der sich zwischen dem ersten Abschnitt (11) und dem zweiten Abschnitt (12) befindet, wobei der dritte Abschnitt (13) eine dritte Porosität *P*3 aufweist, und die dritte Porosität *P*3 kleiner ist als die erste Porosität *P*1 und größer ist als die zweite Porosität *P*2;
die dritte Porosität *P*3 erfüllt: 40 % ≤ *P*3 ≤ 45 %; und
in Breitenrichtung des Separators (1) ein Verhältnis einer Breite des ersten Abschnitts (11), einer Breite des dritten Abschnitts (13) und einer Breite des zweiten Abschnitts (12)*W*1:*W*3:*W*2 beträgt, wobei *W*1 von 0,05 bis 0,1 beträgt, *W*3 von 0,8 bis 0,9 beträgt und *W*2 von 0,05 bis 0,1 beträgt.

2. . Energiespeichervorrichtung (3) nach Anspruch 1, wobei der Separator (1) ferner einen ersten Übergangsabschnitt aufweist, wobei der erste Übergangsabschnitt mit dem ersten Abschnitt (11) und dem zweiten Abschnitt (12) verbunden ist und sich zwischen diesen befindet, und eine Porosität des ersten Übergangsabschnitts allmählich in einer Richtung von dem ersten Abschnitt (11) zu dem zweiten Abschnitt (12) abnimmt.

3. . Verfahren zur Herstellung einer Energiespeichervorrichtung (3), umfassend:
Mischen, umfassend: Bereitstellen eines Basismaterials und eines porenbildenden Mittels und Mischen des Basismaterials mit dem porenbildenden Mittel, um eine Mischung zu erhalten, wobei die Mischung eine erste Mischung und eine zweite Mischung umfasst, wobei in der ersten Mischung ein Massenverhältnis des porenbildenden Mittels zu dem Basismaterial ein erstes Porenbildungsverhältnis ist, in der zweiten Mischung ein Massenverhältnis des porenbildenden Mittels zu dem Basismaterial ein zweites Porenbildungsverhältnis ist und das zweite Porenbildungsverhältnis kleiner ist als das erste Porenbildungsverhältnis;
Schmelzen und Extrudieren, umfassend: Schmelzen und Extrudieren der ersten Mischung, um eine aus der ersten Mischung hergestellte erste extrudierte Platte zu erhalten, und Schmelzen und Extrudieren der zweiten Mischung, um eine aus der zweiten Mischung hergestellte zweite extrudierte Platte zu erhalten;
Verbinden, umfassend: Verbinden der ersten extrudierten Platte mit der zweiten extrudierten Platte;
Porenbilden, umfassend: Entfernen des porenbildenden Mittels aus der ersten extrudierten Platte und der zweiten extrudierten Platte, so dass die erste extrudierte Platte eine erste Porosität *P*1 aufweist und die zweite extrudierte Platte eine zweite Porosität *P*2 aufweist, die kleiner ist als die erste Porosität *P*1, um den Separator (1) zu erhalten; und
Bilden der Energiespeichervorrichtung (3), die den Separator (1), eine Lasche (31), einen Elektrolyten, eine positive Elektrode und eine negative Elektrode umfasst, wobei der Separator (1) einen ersten Abschnitt (11) und einen zweiten Abschnitt (12) aufweist, die in einer Breitenrichtung des Separators (1) angeordnet sind, der erste Abschnitt (11) eine erste Porosität *P*1 aufweist, der zweite Abschnitt (12) eine zweite Porosität *P*2 aufweist, die kleiner ist als die erste Porosität *P*1, und der erste Abschnitt (11) näher an der Lasche (31) der Energiespeichervorrichtung (3) liegt als der zweite Abschnitt (12);
wobei die erste Porosität *P*1 erfüllt: 45 % < *P*1 ≤ 70 %, und die zweite Porosität *P*2 erfüllt: 35 % ≤ *P*2 < 40 %;
wobei der Separator (1) ferner einen dritten Abschnitt (13) aufweist, der sich zwischen dem ersten Abschnitt (11) und dem zweiten Abschnitt (12) befindet, wobei der dritte Abschnitt (13) eine dritte Porosität *P*3 aufweist, und die dritte Porosität *P*3 kleiner ist als die erste Porosität *P*1 und größer ist als die zweite Porosität *P*2;
wobei die dritte Porosität *P*3 erfüllt: 40 % ≤ *P*3 ≤ 45 %; und
wobei in Breitenrichtung des Separators (1) ein Verhältnis einer Breite des ersten Abschnitts (11), einer Breite des dritten Abschnitts (13) und einer Breite des zweiten Abschnitts (12) *W*1: *W*3: *W* 2 beträgt, wobei *W*1 von 0,05 bis 0,1 beträgt, *W*3 von 0,8 bis 0,9 beträgt und *W*2 von 0,05 bis 0,1 beträgt.

4. . Verfahren nach Anspruch 3, wobei
das Schmelzen und das Extrudieren umfassen: Bereitstellen einer ersten Extrusionsöffnung (21), aus der die erste Mischung extrudiert wird, und einer zweiten Extrusionsöffnung (22), aus der die zweite Mischung extrudiert wird, wobei die erste Extrusionsöffnung (21) an die zweite Extrusionsöffnung (22) angrenzend ist, und die erste Mischung in derselben Richtung wie die zweite Mischung extrudiert wird; und
das Verbinden umfasst: Erhalten der ersten extrudierten Platte in einem geschmolzenen Zustand durch Extrudieren der ersten Mischung aus der ersten Extrusionsöffnung (21), Erhalten der zweiten extrudierten Platte in einem geschmolzenen Zustand durch Extrudieren der zweiten Mischung aus der zweiten Extrusionsöffnung (22) und Verbinden der ersten extrudierten Platte in dem geschmolzenen Zustand mit der zweiten extrudierten Platte in dem geschmolzenen Zustand.

5. . Verfahren nach Anspruch 3 oder 4, wobei
das Verbinden umfasst: Bilden eines ersten Übergangsabschnitts (141) an einem Übergang der ersten extrudierten Platte zu der zweiten extrudierten Platte, an dem die erste extrudierte Platte in die zweite extrudierte Platte übergeht, wobei der erste Übergangsabschnitt (141) mit der ersten extrudierten Platte und der zweiten extrudierten Platte verbunden ist und sich zwischen diesen befindet; und
das Porenbilden ferner umfasst: Entfernen des porenbildenden Mittels aus dem ersten Übergangsabschnitt (141), so dass eine Porosität des ersten Übergangsabschnitts (141) allmählich in eine Richtung von der ersten extrudierten Platte zu der zweiten extrudierten Platte abnimmt, um den Separator (1) zu erhalten.

6. . Verfahren nach einem der Ansprüche 3 bis 5, wobei
die Mischung ferner eine dritte Mischung umfasst, wobei in der dritten Mischung ein Massenverhältnis des porenbildenden Mittels zu dem Basismaterial ein drittes Porenbildungsverhältnis ist, und das dritte Porenbildungsverhältnis kleiner ist als das erste Porenbildungsverhältnis und größer ist als das zweite Porenbildungsverhältnis;
das Schmelzen und das Extrudieren ferner umfassen: Schmelzen und Extrudieren der dritten Mischung, um eine dritte extrudierte Platte zu erhalten, die aus der dritten Mischung hergestellt wurde;
das Verbinden ferner umfasst: Veranlassen, dass die dritte extrudierte Platte mit der ersten extrudierten Platte verbunden ist und sich zwischen der ersten extrudierten Platte und der zweiten extrudierten Platte befindet; und
das Porenbilden ferner umfasst: Entfernen des porenbildenden Mittels aus der dritten extrudierten Platte, so dass die dritte extrudierte Platte eine dritte Porosität *P*3 aufweist, die kleiner ist als die erste Porosität *P*1 und größer ist als die zweite Porosität *P*2, um den Separator (1) zu erhalten.

7. . Verfahren nach Anspruch 6, wobei das erste Porenbildungsverhältnis gleich *Y*1/*Y*2 ist, wobei *Y*1 von 80 bis 85 beträgt und *Y*2 von 14 bis 20 beträgt; das dritte Porenbildungsverhältnis gleich *Y*3/*Y*4 ist, wobei *Y*3 von 70 bis 80 beträgt und *Y*4 von 20 bis 30 beträgt; und das zweite Porenbildungsverhältnis gleich *Y*5/*Y*6 ist, wobei *Y*5 von 60 bis 70 beträgt und *Y*6 von 30 bis 40 beträgt.

8. . Verfahren nach einem der Ansprüche 3 bis 7, wobei
das Basismaterial mindestens eines aus Polyethylen mit ultrahohem Molekulargewicht oder Polyethylen hoher Dichte umfasst; oder
das Basismaterial sowohl das Polyethylen mit ultrahohem Molekulargewicht als auch das Polyethylen hoher Dichte umfasst, und ein Massenverhältnis des Polyethylens mit ultrahohem Molekulargewicht zu dem Polyethylen hoher Dichte gleich *X*1/*X*2 ist, wobei *X*1 von 0,5 bis 1,5 beträgt und *X*2 von 0,5 bis 1,5 beträgt.

9. . Stromverbrauchsgerät, umfassend:
einen Vorrichtungskörper; und
die Energiespeichervorrichtung (3) nach Anspruch 1 oder 2, wobei die Energiespeichervorrichtung (3) so eingerichtet ist, dass sie den Vorrichtungskörper mit Strom versorgt.

## Revendications

1. Dispositif de stockage d'énergie (3) comportant un séparateur (1), une languette (31), un électrolyte, une électrode positive et une électrode négative, dans lequel
le séparateur (1) présente une première partie (11) et une deuxième partie (12) agencées dans le sens de la largeur du séparateur (1), dans lequel la première partie (11) présente une première porosité *P*1, la deuxième partie (12) présente une deuxième porosité *P*2 inférieure à la première porosité *P*1 et la première partie (11) est plus proche de la languette (31) du dispositif de stockage d'énergie (3) que ne l'est la deuxième partie (12) ;
la première porosité *P*1 satisfait à : 45 % < *P*1 ≤ 70 %, et la deuxième porosité *P*2 satisfait à : 35 % ≤ *P*2 < 40 % ;
le séparateur (1) présente en outre une troisième partie (13) située entre la première partie (11) et la deuxième partie (12), dans lequel la troisième partie (13) présente une troisième porosité *P*3, et la troisième porosité *P*3 est inférieure à la première porosité *P*1 et supérieure à la deuxième porosité *P*2 ;
la troisième porosité *P*3 satisfait à : 40 % ≤ *P*3 ≤ 45 % ; et
dans le sens de la largeur du séparateur (1), un rapport d'une largeur de la première partie (11), d'une largeur de la troisième partie (13) et d'une largeur de la deuxième partie (12) est *W*1:*W*3:*W*2, dans lequel *W*1 varie de 0,05 à 0,1, *W*3 varie de 0,8 à 0,9 et *W*2 varie de 0,05 à 0,1.

2. Dispositif de stockage d'énergie (3) selon la revendication 1, dans lequel le séparateur (1) présente en outre une première partie de transition, dans lequel la première partie de transition est reliée à et située entre la première partie (11) et la deuxième partie (12), et une porosité de la première partie de transition diminue progressivement dans une direction allant de la première partie (11) à la deuxième partie (12).

3. Procédé de fabrication d'un dispositif de stockage d'énergie (3), comportant :
le mélange, comportant : la fourniture d'un matériau de base et d'un agent porogène, et le mélange du matériau de base avec l'agent porogène pour obtenir un mélange, dans lequel le mélange comporte un premier mélange et un deuxième mélange, dans lequel dans le premier mélange un rapport massique de l'agent porogène au matériau de base est un premier rapport de formation de pores, dans le deuxième mélange un rapport massique de l'agent porogène au matériau de base est un deuxième rapport de formation de pores, et le deuxième rapport de formation de pores est inférieur au premier rapport de formation de pores ;
la fusion et l'extrusion, comportant : la fusion et l'extrusion du premier mélange pour obtenir une première feuille extrudée préparée à partir du premier mélange, et la fusion et l'extrusion du deuxième mélange pour obtenir une deuxième feuille extrudée préparée à partir du deuxième mélange ;
la liaison, comportant : la liaison de la première feuille extrudée à la deuxième feuille extrudée ;
la formation de pores, comportant : l'élimination de l'agent porogène de la première feuille extrudée et de la deuxième feuille extrudée, de sorte que la première feuille extrudée présente une première porosité *P*1 et que la deuxième feuille extrudée présente une deuxième porosité *P*2 inférieure à la première porosité *P*1, afin d'obtenir le séparateur (1) ; et
la formation du dispositif de stockage d'énergie (3) comportant le séparateur (1), une languette (31), un électrolyte, une électrode positive et une électrode négative, dans lequel le séparateur (1) présente une première partie (11) et une deuxième partie (12) agencées dans le sens de la largeur du séparateur (1), la première partie (11) présente une première porosité *P*1, la deuxième partie (12) présente une deuxième porosité *P*2 inférieure à la première porosité *P*1 et la première partie (11) est plus proche de la languette (31) du dispositif de stockage d'énergie (3) que ne l'est la deuxième partie (12) ;
dans lequel la première porosité *P*1 satisfait à : 45 % < *P*1 ≤ 70 %, et la deuxième porosité *P*2 satisfait à : 35 % ≤ *P*2 < 40 % ;
dans lequel le séparateur (1) présente en outre une troisième partie (13) située entre la première partie (11) et la deuxième partie (12), dans lequel la troisième partie (13) présente une troisième porosité *P*3, et la troisième porosité *P*3 est inférieure à la première porosité *P*1 et supérieure à la deuxième porosité *P*2 ;
dans lequel la troisième porosité *P*3 satisfait à : 40 % ≤ *P*3 ≤ 45 % ; et
dans lequel, dans le sens de la largeur du séparateur (1), un rapport d'une largeur de la première partie (11), d'une largeur de la largeur de la troisième partie (13) et d'une largeur de la largeur de la deuxième partie (12) est *W*1: *W*3: *W*2, dans lequel *W*1 varie de 0,05 à 0,1, *W*3 varie de 0,8 à 0,9, et *W*2 varie de 0,05 à 0,1.

4. Procédé selon la revendication 3, dans lequel
la fusion et l'extrusion comportent : la fourniture d'un premier orifice d'extrusion (21) duquel est extrudé le premier mélange et d'un deuxième orifice d'extrusion (22) duquel est extrudé le deuxième mélange, dans lequel le premier orifice d'extrusion (21) est adjacent au deuxième orifice d'extrusion (22), et le premier mélange est extrudé dans la même direction que le deuxième mélange ; et
la liaison comporte : l'obtention de la première feuille extrudée dans un état fondu par extrusion du premier mélange par le premier orifice d'extrusion (21), l'obtention de la deuxième feuille extrudée dans un état fondu par extrusion du deuxième mélange par le deuxième orifice d'extrusion (22), et la liaison de la première feuille extrudée à l'état fondu à la deuxième feuille extrudée à l'état fondu.

5. Procédé selon la revendication 4 ou 3, dans lequel
la liaison comporte : la formation d'une première partie de transition (141) à une jonction de la première feuille extrudée et de la deuxième feuille extrudée où la première feuille extrudée et la deuxième feuille extrudée sont mélangées, dans lequel la première partie de transition (141) est reliée à et située entre la première feuille extrudée et la deuxième feuille extrudée ; et
la formation de pores comporte en outre : l'élimination de l'agent porogène de la première partie de transition (141), de sorte qu'une porosité de la première partie de transition (141) diminue progressivement dans une direction allant de la première feuille extrudée à la deuxième feuille extrudée, afin d'obtenir le séparateur (1).

6. Procédé selon l'une quelconque des revendications 3 à 5, dans lequel
le mélange comporte en outre un troisième mélange, dans lequel, dans le troisième mélange, un rapport massique de l'agent porogène au matériau de base est un troisième rapport de formation de pores, et le troisième rapport de formation de pores est inférieur au premier rapport de formation de pores et supérieur au deuxième rapport de formation de pores ;
la fusion et l'extrusion comportent en outre : la fusion et l'extrusion du troisième mélange afin d'obtenir une troisième feuille extrudée préparée à partir du troisième mélange ;
la liaison comporte en outre : le fait d'amener la troisième feuille extrudée à se lier à et à se positionner entre la première feuille extrudée et la deuxième feuille extrudée ; et
la formation de pores comporte en outre : l'élimination de l'agent porogène de la troisième feuille extrudée, de sorte que la troisième feuille extrudée présente une troisième porosité *P*3 inférieure à la première porosité *P*1 et supérieure à la deuxième porosité *P*2, afin d'obtenir le séparateur (1).

7. Procédé selon la revendication 6, dans lequel le premier rapport de formation de pores est égal à *Y*1/*Y*2, dans lequel *Y*1 varie de 80 à 85 et *Y*2 varie de 14 à 20 ; le troisième rapport de formation de pores est égal à *Y*3/*Y*4, dans lequel *Y*3 varie de 70 à 80 et *Y*4 varie de 20 à 30 ; et le deuxième rapport de formation de pores est égal à *Y*5/*Y*6, dans lequel *Y*5 varie de 60 à 70 et *Y*6 varie de 30 à 40.

8. Procédé selon l'une quelconque des revendications 3 à 7, dans lequel
le matériau de base comporte au moins l'un d'un polyéthylène de très haut poids moléculaire ou d'un polyéthylène haute densité ; ou
le matériau de base comporte à la fois le polyéthylène de très haut poids moléculaire et le polyéthylène haute densité, et un rapport massique du polyéthylène de très haut poids moléculaire au polyéthylène haute densité est égal à *X*1/*X*2, dans lequel *X*1 varie de 0,5 à 1,5 et *X*2 varie de 0,5 à 1,5.

9. Appareil de consommation d'électricité, comportant :
un corps de dispositif ; et
le dispositif de stockage d'énergie (3) selon la revendication 1 ou 2, dans lequel le dispositif de stockage d'énergie (3) est configuré pour alimenter le corps de dispositif.
